# EUROPEAN PATENT SPECIFICATION

(11) **EP 1 066 573 B1**
(45) Date of publication and mention of the grant of the patent: **18.02.2004**
(21) Application number: 99913459.6
(22) Date of filing: 26.03.1999
(51) Int. Cl.: G06F 17/30, G06F 19/00

(54) **SYSTEM AND METHOD OF DIRECTING A USER TO ACCESS AN INFORMATION SITE**
SYSTEM UND VERFAHREN ZUM FÜHREN EINES BENUTZERS AUF EINE INFORMATION-SITE
SYSTEME PERMETTANT DE DIRIGER UN UTILISATEUR SUR UN SITE D'INFORMATION ET METHODE AFFERENTE

(30) Priority: 27.03.1998 GB 9806664
(43) Date of publication of application: 10.01.2001
(73) Proprietor: Global Performance Marketing Ltd., Elto, Peterborough PE8 6SA (GB)
(72) Inventor: FAGELMAN, Anthony, Cambridge CB2 5AN (GB)
(74) Representative: Beresford, Keith Denis Lewis
(86) International application number: PCT/GB1999/000957
(87) International publication number: WO 1999/050760

(56) References cited:
- WO-A-97/10561
- US-A- 5 035 625
- PERRONE C ET AL: "WebQuest: Substantiating education in edutainment through interactive learning games" COMPUTER NETWORKS AND ISDN SYSTEMS, vol. 28, no. 11, 1 May 1996 (1996-05-01), page 1307-1319 XP004018229 ISSN: 0169-7552
- GATES R: "Internet cruising with the Internet Hunt" ELECTRONIC LIBRARY, FEB. 1993, UK, vol. 11, no. 1, pages 19-24, XP002109294 ISSN: 0264-0473
- BOSWORTH K: "Computer games and simulations as tools to reach and engage adolescents in health promotion activities" COMPUTERS IN HUMAN SERVICES, 1994, USA, vol. 11, no. 1-2, pages 109-119, XP002109295 ISSN: 0740-445X

## Description

The present invention generally relates to the accessing of information from an information site such as a web page.

The use of the internet for both business and personal use has expanded rapidly over the past few years. In particular, the use of the worldwide web has expanded such that many businesses now have a presence on the web in the form of web pages. Web pages can provide useful commercial information about a company and can be used for direct commercial dealings such as the selling of products in addition to the advertisement of products. Thus, it is considered by most businesses to be vital to have a "presence" on the worldwide web to increase the profile of the business and to advertise products. Businesses are therefore keen to attract potential customers to view their web sites.

In addition to the use of worldwide web by businesses, it is also extensively used for leisure and educational purposes. Games such as "Quake" have been developed which are now played over the worldwide web.

Further, the worldwide web is used for teaching purposes. For example the WebQuester site operated by McGrawHill (http://www.mhhe.com/webquest) allows a teacher or professor to set a series of questions which require answers from particular web sites. This system therefore provides a teaching aid whereby pupils learn about particular subjects by reading about it on particular web sites to which they are directed and answering the particular questions set. Answers are given either by a text entry or by a choice from possible answers.

To date business and leisure or educational interests have been serviced independently.

Further examples of web based interactive games are discussed in WO-A-97/10561 and Perrone C et al: "Webquest: Substantiating education in edutainment through interactive learning games" Computer Networks and ISDN Systems, Vol. 28, No. 11, 1 May 1996, pages 1307-1319.

In accordance with one aspect of the present invention there is provided a computer in accordance with claim 1.

In accordance with a further aspect of the present invention there is provided a computer system in accordance with claim 32.

In accordance with a further aspect of the present invention there is provided a server in accordance with claim 43.

In accordance with embodiments of the present invention there is provided a method and apparatus for directing the user to access information at an information site. The user is encouraged to access an information site by tasks which are set by a processing application. For example, the processing application can be some form of game which requires information in order to progress through the game. Alternatively, the processing application could be an educational application whereby questions are asked and require answers. In order to input the necessary information the user is required to identify and access information at an information site. The act of accessing the information is logged to provide a record of access and the user is subsequently able to progress the processing by providing information to the processing application.

It can thus be seen that, whilst allowing the user to retrieve the necessary information and therefore progress the processing application, a record can be kept of the accessing of the information sites. This record can be kept at any one of a number of locations e.g. at the location of the user, at the location of the information site, or at a remote monitoring site.

In an embodiment of the present invention the information sites comprise web pages which can either be made available locally to a computer e.g. they can be stored in storage medium within a machine, and/or they can be made available over a network such as the internet or a company's intranet. In such an embodiment the user interface means and accessing means comprises a web browser such as Netscape (Trademark) or Internet Explorer (Trademark).

Thus whilst a user benefits from the game or educational information provided, they are being directed to particular web pages. Such web pages can be owned by commercial organisations who wish to promote their products or services. Thus this aspect of the present invention, whilst providing a benefit to the user, also provides a benefit to the proprietor of the web sites in that people are encouraged to access and view their web pages. Proof of visitation to the web pages is available to the commercial organisation thus enabling not only the identification of how often the web site is visited, but also by whom.

Hypertext mark up language (HTML) can be provided to a user's computer to be implemented by a browser to operate an application with which the user wishes to interact and which can direct the user to retrieve information from desired web pages. Thus, it is possible for the designers of the HTML code to operate with the proprietors of the web pages. Thus the designers of the HTML code are able to offer a service to businesses whereby subscribers to the service are provided with increased traffic to web pages and information identifying the people viewing their web pages.

In order to provide the information on the accessing of the web page, information identifying the user can be provided to a control apparatus associated with the web page e.g. the web server. In this way access log information is provided directly to the web server. This can either be provided every time the web page is accessed or an access log can be stored at the user's machine and then transmitted to the web server either at the end of a game for example, or periodically.

Alternatively information on the accessing of the web pages by the user i.e. identification of the user and the accessed web page can be provided to monitoring apparatus e.g. a server operated by the providers of the service to the proprietors of the web pages. The information could either be sent to the server every time the web page is accessed, or a log can be kept on the user's machine and this can be transmitted to the monitoring apparatus at appropriate times e.g. at the end of the game or periodically. The latter method is preferred since this requires a reduced band width for the transmission of the information as a log to the server.

Another embodiment of the present invention the information required by the processing application is available on the web page and the user is thus able to retrieve the information once the web page has been located and retrieved. The information can then be transferred into the processing application e.g. where an answer to a question is required in the form of text, the text can be located in the target web page and cut and pasted into the processing application.

In another embodiment of the present invention, the information required by the processing application is input by the user after having viewed the web page. In this embodiment either the information in the exact required form is not present or although information may be required to be retrieved from the web site, further information is required to be input by the user in order to answer the question and progress through the game for example.

In an embodiment of the present invention the status of the processing application can be sent to the monitoring apparatus. Thus in this embodiment where a service is provided to commercial organisations owning the target web pages, and it is necessary to monitor the progress of the users e.g. for purposes of marking the questions for determining the winner of a game, information identifying the progress by the user can be sent to the monitoring apparatus. For security this can be encrypted. This level of control also allows the monitoring apparatus to send status information to the user's machine when a user re-enters a game for example. The received status information allows the game to be re-started at the position at which it was last left by the user. This holding of the status information remote from the user's computer provides a level of security.

In order for processing apparatus to progress to process information, it must be determined whether the information which it is provided with is the required information e.g. whether the answer to the question put to the user is correct. This checking can either be carried out at the user's machine or at the monitoring apparatus. Where the checking is carried out at the user's apparatus, it is necessary for the apparatus to have stored therein the answers to the questions i.e. it must have knowledge of the required information. This information can either be initially be provided with the code for implementing the processing application, or it can be downloaded from the monitoring apparatus.

Since all the aspects of the present invention can be implemented by a conventional computer apparatus operating a computer program, the present invention also provides a storage medium in accordance with claim 15. The computer program can be downloaded in an electronic form over a network such as the internet.

In an embodiment of the present invention all of the computer code can be downloaded from a remote server over a network such as the internet by a user machine to participate. The remote server will thus contain information regarding the user and the target web pages to which the user is to be directed.

In an alternative embodiment a backbone or structure for the computer code is provided locally on the user's computer for example by an initial download or on a storage medium such as a CD ROM or floppy disk in order to avoid downloading all of the code required every time the user wishes to play the game. All that is required in this embodiment is the downloading of particular parameters e.g. clues or questions in order for a game to be played.

In a further embodiment it is also possible that all of the computer code is provided locally and no parameters are downloaded when the game is played. This will provide a limited game which is not upgradable on-line and would not allow the updating of the target web page addresses should these change.

In yet another embodiment of the present invention all of the programs are provided remotely at a server so that a user's machine can be of minimum capability. Only graphics and/or text are sent over the network to the user's machine. This arrangement is applicable to for example web TV "Set Top Boxes". An aspect of the present invention is also applicable to a system wherein the proprietors of the target web pages do not cooperate with the designer of the computer program. In this case, the proprietors of the visited web pages do not obtain useful statistical information which can be made available as a result of the operation of the system.

The present is not limited to use over the internet and is applicable to any network which enables information to be passed over it. Thus, in a large company for example, the present invention can be employed to encourage employees to visit company web pages over the intranet.

Another aspect of the present invention provides a system for training a user in the use of an information retrieval system e.g. the worldwide web. In the specific embodiment of the worldwide web, by providing an interface in the form of a game for example, the user is encouraged to interact with the computer in order to play the game. Such an interaction causes the user to have to navigate to web pages following for example clues in order to retrieve the necessary information in order to progress through the game. Thus this embodiment of the present invention provides a web training system.

The embodiments of the present invention will now be described with reference to the accompanying drawings in which:
Figure 1 is a schematic diagram of the system in accordance with one embodiment of the present invention;
Figures 2a is a flow diagram illustrating the operation of Figure 1 in accordance with a first embodiment of the present invention;
Figure 2b is a flow diagram illustrating the operation of Figure 1 in accordance with a second embodiment of the present invention;
Figure 3 is a schematic view of the system in accordance with the third embodiment of the present invention;
Figures 4a and 4b are a flow diagram of the operation of the third embodiment;
Figure 5 is a schematic diagram of the game server in the system of Figure 3;
Figure 6 is a schematic drawing of the user's computer in the system of Figure 3;
Figure 7 is a schematic illustration of the web browser interface;
Figure 8 is a schematic illustration of the game interface;
Figure 9 is an illustration of the structure of a token;
Figure 10 is a schematic drawing of the construction of a computer in accordance with a further embodiment of the present invention.

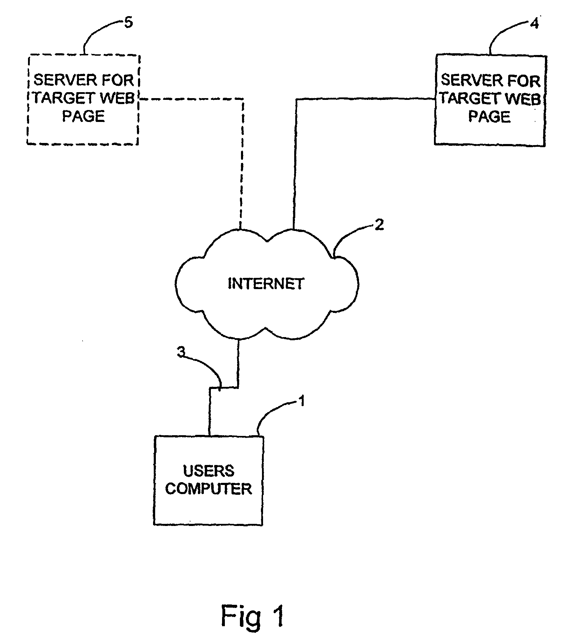

In Figure 1 a user's computer 1 comprises a personal computer capable of running a web browser application such as an Netscape (Trademark) or Internet Explorer (Trademark) which is capable of running Java (Trademark). The user's computer 1 is connected to the internet 2 via a modem and a telecommunications line 3 for example.

The web browser application implements hypertext mark up language (HTML) which includes a Java applet which implements a processing application such as a game or educational application which requires information to be input. Thus, when a user implements a system, initially the web browser is loaded and this will load an initial web page which will cause the Java to be launched thus implementing the game or the like.

Also connected to the internet 2 are one or more servers 4 and 5. A server comprises a web server storing HTML code which is retrievable over the internet by the web browser implemented on the user's computer 1 in order to view the information contained within the web page. The servers can for example comprise servers operated by businesses which wish to advertise their business or products.

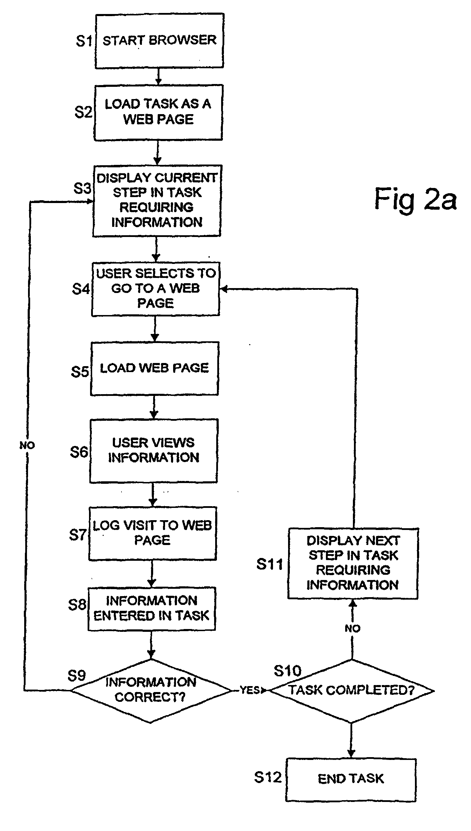

The operation of Figure 1 in accordance with a first embodiment of the present invention will now be described with reference to Figure 2a.

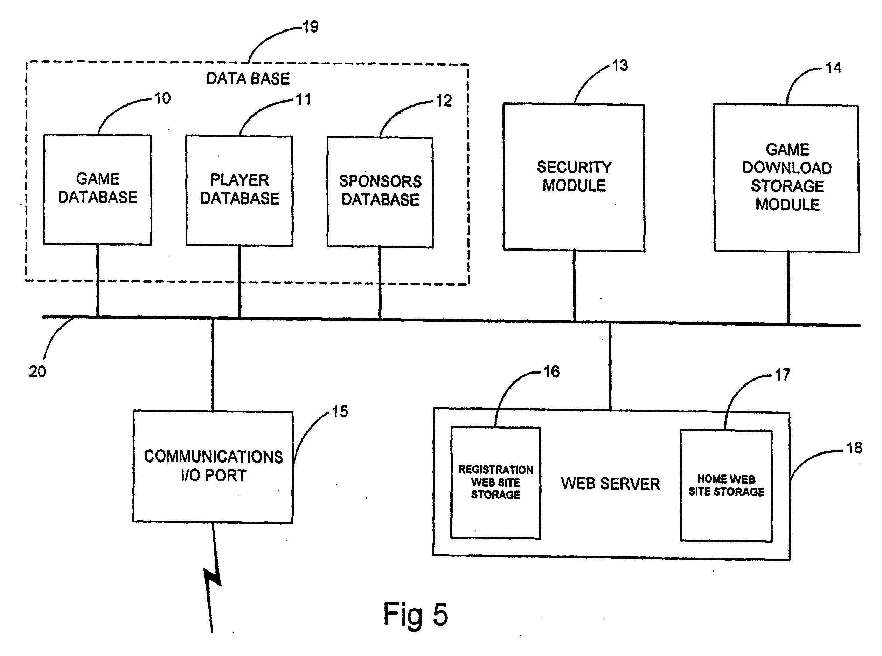

In step S1 the browser is loaded and in step S2 the task such as a game or educational application is loaded as a web page. In step S3 the display illustrates the current step or position in the task e.g. game which the user has progressed to and which requires information to progress further. In step S4, based on a displayed clue or question for example, the user can select to go to a particular web page as necessary in order to progress the task. In step S5 the selected web page is then loaded via the internet from one of the servers from Figure 5. In step S6 the user then views the information in the web page and in step S7 the visitation to the web page is logged. In step S8 information can then be added in to the task in order to progress the task. In step S9 it is determined that the information is incorrect the process then returns to step S3. If the information is correct, in step S10 it is determined whether the task is completed. If not in step S11 the next step in the task is displayed which requires information and the process returns to step S4. If the task has been completed, the task is ended in step S12.

Thus in this embodiment of the present invention visitations to the target web sites are monitored and logged. This information can then be used by the proprietors of the target web sites for example, marketing purposes. Information can only be entered into the tasks after the web page has been visited. This information can either be entered using information directly from the web page or information can be entered manually.

This embodiment to the present invention any method of logging the visit to the web page can be used. For example, the URL of the visited web page can be stored locally together possibly with the time of access. This information can then be sent to the server for the target web page at a later date together with information identifying the user. The information could be transmitted for every time the web page is accessed or periodically.

Alternatively when a user accesses a target web page, an identification (ID) for the user is transmitted. If the server for the target web page has no information regarding the user from the user ID, it can request the sending of details on the user. For subsequent accesses of the web page it is sufficient for the user's machine to send the user's ID.

The transmission protocol which can be used for the transmission information between the user's computer and the server can be any of the internet protocols e.g. FTP or HTTP.

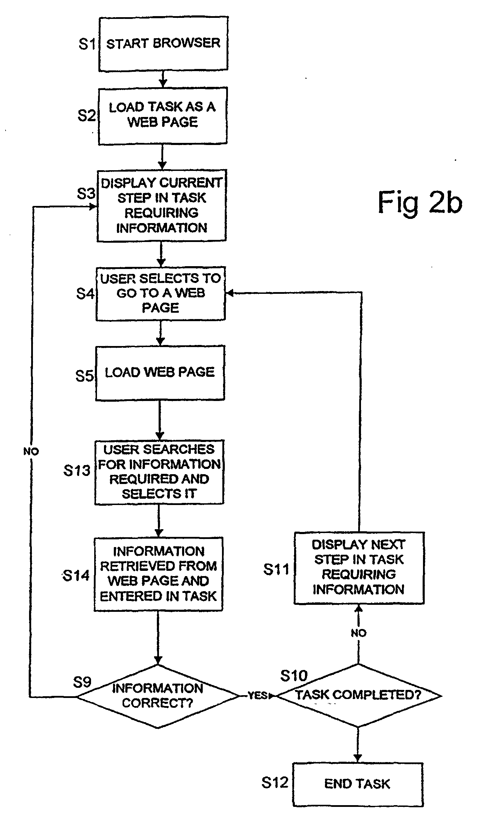

The operation of Figure 1 in accordance with another embodiment of the present invention will now be described with reference to Figure 2b.

In this embodiment like steps to the first embodiment are given like references in this embodiment. The only differences between the two embodiments is that after the web page has been loaded in step S5 instead of merely viewing the information on the web page, the user must search for the information which is required and it is selected in step S13. Then in step S14 the information is retrieved from the web page and it is entered in the task directly.

Thus in this embodiment of the present invention no manual input of information is required. The information can either be contained within the retrieved web page or it can be added to the web page during the loading step S5.

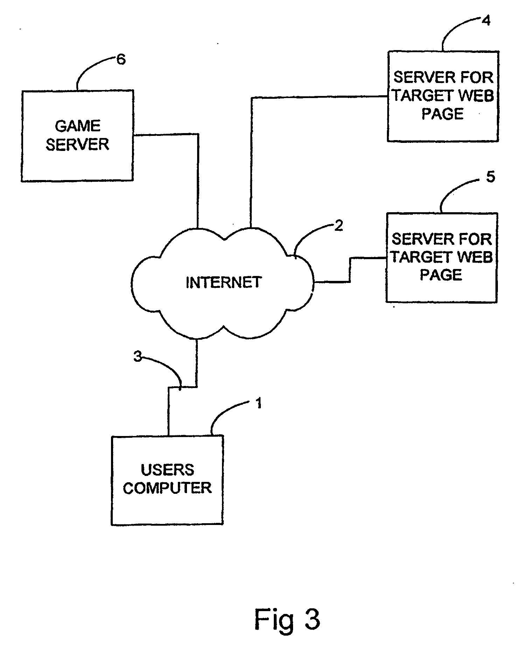

Figure 3 illustrates a third embodiment of the present invention similar to the embodiment illustrated in Figure 1 except that a game server 6 is additionally connected to the internet 2. The game server 6 is provided by the designers of the program operated by the user's computer 1. The principle of the embodiment of Figure 3 is to provide a game to the user 1 with an incentive of a prize for the winner of the game, and to provide a service to the proprietors of the target web pages whereby marketing information is provided as obtained during the implementation of the game.

In this embodiment it is assumed that the user's computer 1 has already received the game structure either from a previous download over the internet from a suitable web server e.g. game server 6, or from a storage medium such as a CD ROM or floppy disk.

When a user initially uses the software it will be necessary for them to connect over the internet to the game server 6 in order to register. The process of registration requires the user to enter the minimum details e.g. name, address and telephone number in order to be assigned a user identification number (user ID) and password. The registration process can be carried out by the user accessing a registration web page. Registration for playing the game may require a payment or subscription which may go towards the prize money. The user may also be encouraged to enter further marketing information by virtue of an incentive such as a reduced subscription.

Once a user has registered, in order to play the game as will be described in more detail hereinafter, it is necessary for a user to log on to the game server 6 whereupon game parameters are downloaded enabling the user to play the game. In this embodiment only game parameters are downloaded and not all of the computer codes and graphics. This has the benefit of reducing the network traffic.

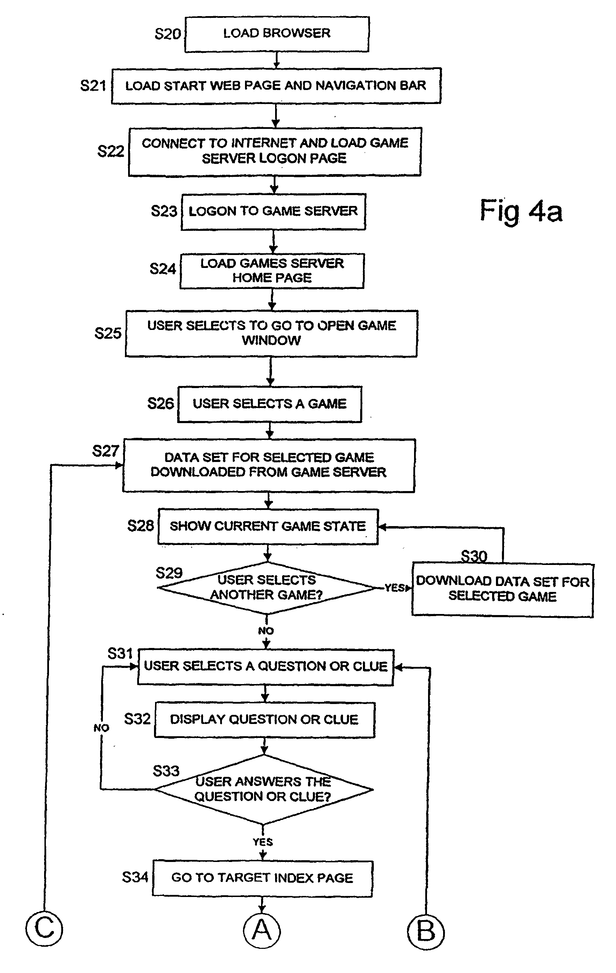

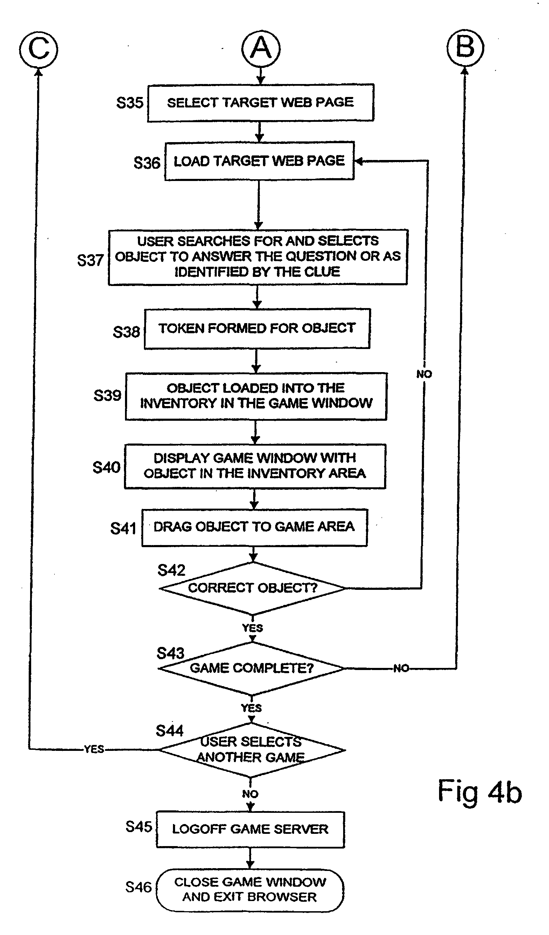

Figures 4a and 4b are flow diagrams illustrating the operation of this embodiment of the present invention.

In step S20 the browser is loaded and automatically loads HTML code which causes a start web page to be displayed and the Java contained within the code launches a navigation bar which replaces the conventional navigation bar of the browser.

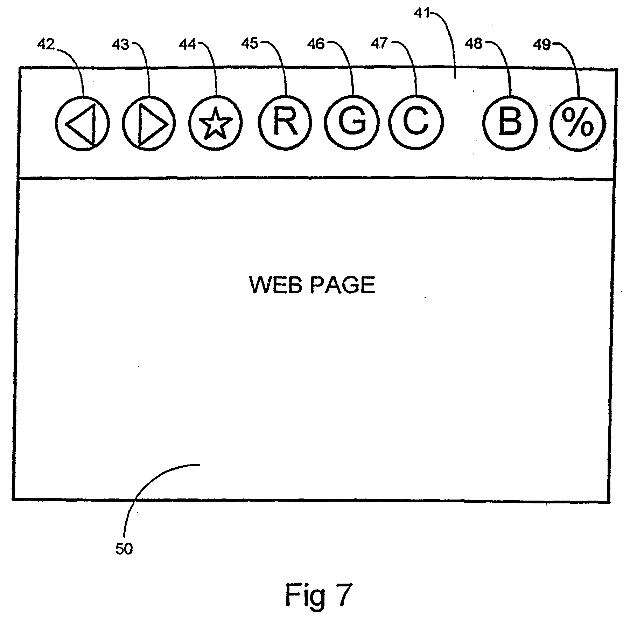

Figure 7 schematically illustrates the layout of the display. The bulk of the display is taken up by the web page 50. At the top of the web page 50 is displayed the navigation bar 41 which is provided with certain navigation icons. The icons 42 and 43 comprise the back and forward buttons. The icon 44 comprises a button to select a target index page (as will be described in more detail hereinafter). Icon 45 is a button used to retrieve information from a web page. Icon 46 is used to select the game window and can illustrate the current game being implemented. Icon 47 illustrates the current clue or question. Icon 48 is a button for bookmarking the current web page. This button adds the address of the current web page into the browser's bookmark file. Icon 49 is a button allowing the display of player statistics for the game e.g. number of the questions answered, the number of objects retrieved, and the number of questions left.

In step S22 of Figure 4a a connection is then made to the internet in order to load the game server logon page. The user then enters the user ID password in order to logon to the game server (this may be a manual or automatic operation) in step S23 and in step S24 in response to a successful logon the game server home page is loaded. The user can then select to launch the game window using the icon 46.

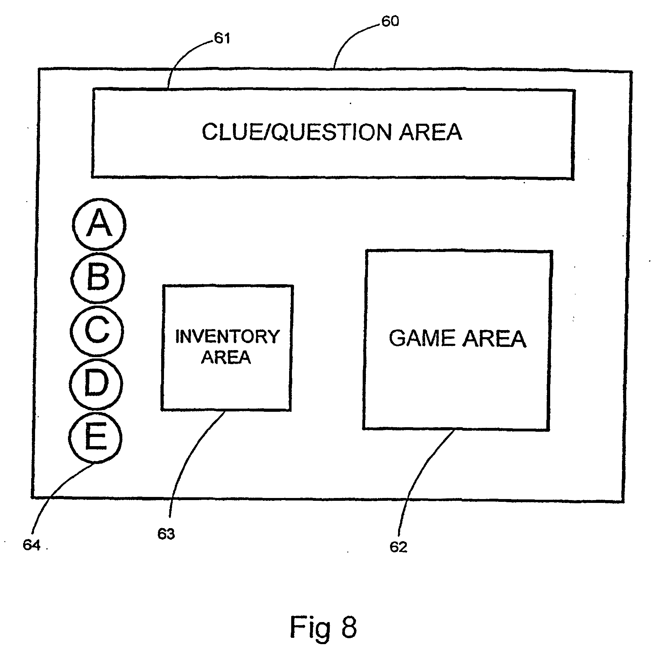

The game application is then launched as a Java applet and a game window 60 is generated as illustrated in Figure 8. The window 60 comprises a clue or question area 61 in which the clues or questions to be answered are illustrated. A game area 62 illustrates the game and an area 63 is provided for storing the retrieved information in an inventory. Icon 64 provided in the left hand part of the display 60 allow the selection of the game being played. In this example, there is an option of five different games. This is merely however, a matter of design.

The game area displays the game as it is being played. For example, if the game comprises a crossword, the game area will illustrate crossword and clue/question area 61 will illustrate the clues/questions. The inventory area 63 will illustrate answers which have been retrieved i.e. words which can then be inserted into the game area.

There are many different types of games which can be played, some of which require the information to be inserted into the inventory and then correctly placed in the game area, others of which many require the information to be retrieved whereupon they will automatically be inserted into the correct position in the game area. Other games may require not just the retrieval of the information into the inventory, but also the additional input by the user e.g. the answering of additional questions, or, in a chess game, making chess pieces move once they have been collected from target web pages.

The browser window illustrated in Figure 7 and the game window illustrated in Figure 8 can be shown either side-by-side or in a tiled arrangement as is conventional in the Windows (Trademark) operating system.

Once the game has been launched and the window 60 opened in step S25 a user can select a game using the icon 64. When the icon 64 is selected in step S27 the data set for the selected game can be downloaded from the game server 6. The data set comprises the parameters necessary for the operation of the game but need not comprise the code for the structure of the game. For example, for the crossword game, the user's computer already contains a code for implementing a crossword. What is downloaded are the clues, layout parameters i.e. positions of the answers within the crossword, the answers, and information on the current state of the game (required so that a user can exit the game and re-enter at the same position).

In step S28, the game window illustrates the current state of the game. In step S29 a user can then select to play another game and if they do so in step S30 a data set for the selected game is downloaded and the process returns to step S28. If the user decides to proceed with the game they select a clue or question in step S31 whereupon the clue or question is displayed. A user may decide not to answer the clue or question in which case the process returns to step S31 to allow the user to select either a clue or question. If a user decides to answer a clue or question, the user must go to a target web page. In order to do this the user uses icon 44 in order to select to display the target index page in step S34.

The target index page comprises a web page which is an index of all the selected target web pages to which the player of the game can navigate. The user can select to go the target web page simply by selecting a display icon within the web page area 50 of the display in step S35. The target web page is then loaded in step S36 allowing the user to search for and select an object as required in order to answer the question for as identified by the clue. The object which can be selected by a user can comprise any type of information e.g. text, audio, video, or image data. The selected object can then be retrieved using the retrieve icon 45. The action of retrieving the object from the target web page causes the formation of a token in step S38.

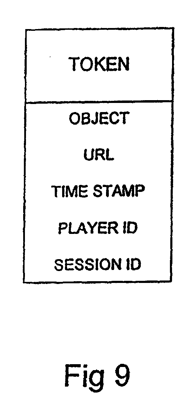

Figure 9 illustrates the data contained within a token for an object. The token contains the object itself i.e. text, audio, video, or image data, the universal resource location (URL) for the target web page, a time stamp indicating the time of accessing the web page, the players user ID, and a session ID. The session ID is assigned to a session when a user logs on. This session ID is transmitted to the user during the logon sequence together with the data set. The session ID comprises a public key to be used for encryption. Thus the retrieved data, the URL for the target web page, time stamp data and the player ID are all encrypted using the session ID to form a token for the retrieved object.

The retrieved object is then loaded into the inventory in step S39. The step of loading the object comprises the storage of a token in temporary memory in the user's machine and the display of an image of the object in the inventory area 63 in the game window 60 in step S40. The displayed object can then be dragged from the inventory area 63 to the game area 62. If the object is not the correct object (step S42) the process returns to step S36 to load the target web page to allow the user to try again. If the object is correct the process proceeds to step S43 to determine if the game is complete i.e. all the objects have been collected. If the game is not complete the process returns to step S31 to allow the selection of a further question or clue. If the game is complete, the user can select another game in step S44 whereupon the process returns to step S27. If no other game is selected, in step S45 the process of logging off from the game server is carried out whereupon information regarding the current status of the game or games can be transmitted to the game server. Such information includes the collected tokens and any other parameters which may have been entered by the user manually. The game window is then closed and the browser is exited in step S46.

Figure 5 illustrates schematically the structure of the game server 6. Within the game server 6 there is provided the database 19, a security module 13, a game download storage module 14, a communications I/O port 15 and a web server 18 all of which are interconnected via a data and control bus 20.

The communications I/O port 15 allows the interconnection of the server to the internet 2 via a telecommunications link. Thus, the communications I/O port receives and transmits information.

The web server 18 acts as an internet web server and thus hosts the registration web site 16 and the home web site 17. The game download storage module 14 stores computer code which may be in compressed form which can be downloaded to a new user to be installed on a user's computer. Thus, initially when a user wishes to use this embodiment of the present invention the code which implements the structure of the games can be retrieved and downloaded over the internet using for example the file transfer protocol (FTP). The software can then be installed on the user's machine. Thus, when the newly installed software is run using a browser for the first time, the user is directed to register at the registration web site 16 the web server 18 of the game server 6. As described hereinabove, in order to register a user enters their details such as name and address which is then entered into the player database 11 within the database (19). If the player enters additional marketing information this can also be entered into the player database (11) and thus the player database retains the user's ID together with information on them.

Once a user has registered, when a user wishes to logon subsequently, they will transmit their user ID and password, this can be matched with the user ID and password within the player database 11 to determine whether there is a match. If a match is found, the security module 13 generates a public key (session ID) which is transmitted to the user. Also, when logged on data sets for games are transmitted to the user. The current states of the game for each player is held in a player database 11. Part of the data set can also include the questions (although these may actually be part of the computer code initially downloaded and installed). The questions can be read from the game database 10 under the control of the security module 13 which will decide which questions are to be transmitted to the user. Also, answers which are stored in the game database 10 can be transmitted to the user as part of the data set and the answers can be encrypted by the security module 13. Also the security module 13 can determine the order and number of the answers to be transmitted to the user. Thus the security module 13 generates the order of the questions for each player and can also determine the order of the games played by each player.

The data set also includes lay out parameters e.g. the layout of a crossword and such parameters are available from the game database 10.

The game database 10 also includes instructions for the modification of the target web pages. The pages which are downloaded can be modified by the web browser using for example, Java and such modifications can be global for all games or can be different for different games. For example, when a web page is downloaded, the browser could add an icon into the web page which is the object which is to be retrieved from the web page and added to the inventory.

The web server 18 hosts the game home web site part of which is public and part of which is private for players. The private part of the home web site is only accessible using a user ID and password.

In the database 19 there is provided a sponsors database 12. Within this database the name and details of sponsors associated with target web sites are kept. The sponsors database 12 can include processed information on the accesses made to the sponsors web pages and information on the players whose access the web page. Thus a sponsors may subscribe to the service offered in order to ensure the maximum exposure to the public of their web site and to gain information on people playing the games. The information from the sponsor's database 12 can be provided to the sponsors' either periodically under the control of the game server, or the host server for the target web pages may have access to the sponsors database 12 with appropriate security measures.

Either periodically during the game or when a user logs off from the game, status information is transmitted to the game server 6 together with tokens. The status information can be stored in the players database 11 and the tokens can be validated by the security module 13 using a private key for decryption of the public key encrypted token.

Other parameters which may possibly be transmitted to the user are player statistics and these are available from the players database 11.

The database 19 can be implemented as a database application which can be interfaced to the web server application 18 using Perl for example. Also, the security module 13 can be implemented in C or cgi Perl which is also interfaced with the web server 18.

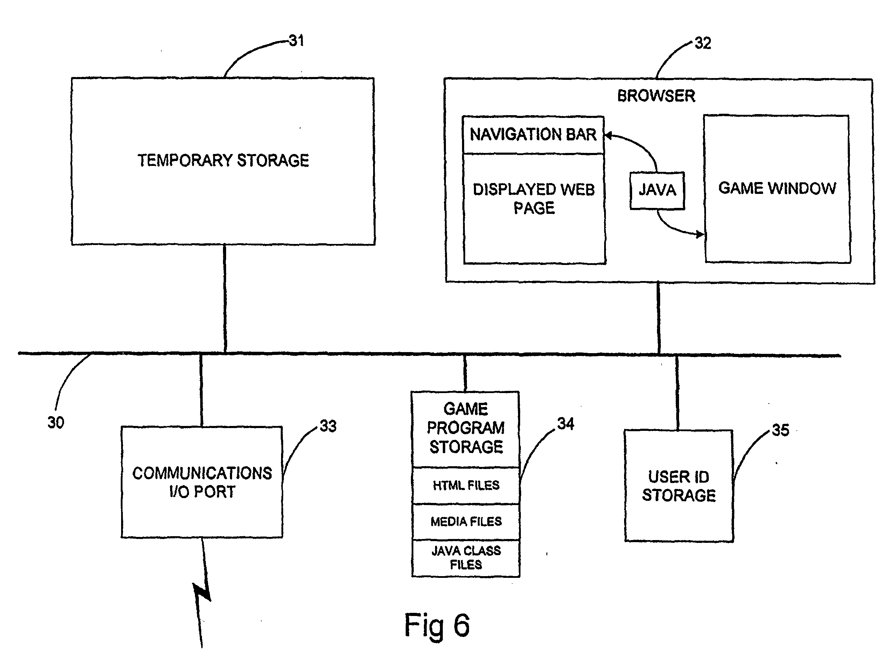

Figure 6 is a schematic illustration of the structure of the user's computer. The components of the computer are connected together via a data and control bus 30. The computer is connected to the internet via the communications I/O port 33. A game program storage module 34 is provided to store.
1. The HTML files for interpretation by the web browser;
2. The media files, e.g. the image, video and any text files which are used either to construct the web pages or in the construction of the game window 60; and
3. Java class files for implementation by the browser.

A storage unit 35 is also provided to store the users ID and password permanently before transmission to the game server during the log on sequence.

The browser 32 is implemented initially to display in the browser window a displayed web page and subsequently a navigation bar and a game window are launched as Java applets.

During a game temporarily stored within the memory of the computer are various parameters comprising:
1. Collected tokens;
2. Questions;
3. Answers;
4. Layout parameters;
5. The session key;
6. Instructions for modifying the sponsors web page; and
7. Game status information.

Thus it can be seen from the description above, since question and answers are transmitted on the internet, security measures are needed. Answers, when transmitted, are encrypted. There are two extremes for dealing with checking whether the answers are correct. Either the answers are never transmitted to the user and thus the user can never know whether the answers are right until the tokens have been transmitted to the game server, or all the answers are transmitted to the user so that a check can be made at the user's machine as to whether the collected tokens are correct. This latter method however, suffers from the disadvantage that the answers are present on the user's machine and thus could be decrypted. It does, however, provide the advantage that the user has immediate feedback as to whether the answers are correct or not.

It is of course possible to operate between these extremes for example, by transmitting some of the answers. Only some of the questions together with their answers could be transmitted to the user and only when the user successfully answers these questions are further questions and answers sent.

It may be desirable to only release questions on certain days in order to make the game last over many days. The problem with this is that the game server will experience a heavy demand for downloading the questions when they are released. This problem can be avoided by randomly releasing different questions to different users.

The method by which the answers can be checked with the correct answers depends upon the form of the object or token retrieved from the web page. If the object retrieved is a passage of text, this can simply be compared with text which comprises the correct answer. If the object retrieved is an image, audio, or video file, a comparison can be made of the file name for retrieved image, audio or video with the correct file name.

When not all of the answers are downloaded to the users machine, it is necessary to know the form of the answers i.e. the type of objects which are to be retrieved from the web page e.g. audio, text, or images. This ensures that the correct type of object is retrieved from the web page so that a comparison of data in the correct form with the answer can be made.

If the object to be retrieved comprises any images, audio or video, a representation of the retrieved data must be provided in the inventory area. Thumbnail images can be generated either when the data is retrieved from the web page, or it can be provided with the answers so that only thumbnail images of the correctly retrieved objects can be inserted in the inventory. Replacement of the retrieved objects in the game can then take place by dragging the thumbnail from the inventory area to the game area.

Although in the flow diagram of Figures 4a and 4b, it is illustrated that whenever a user requests a new game, the data set is transmitted for that game, it is also possible that when a user logs on, the data sets for all games are transmitted. This of course increases the initial data transmission and removes the need for requesting further data when a user selects another game.

Within the embodiments described above, the target web pages are remote to the user's computer over the internet, this need not be the case. The target web pages can be provided locally within the user's PC. For example, it can be provided on a suitable storage medium e.g. on a CD ROM or a floppy disk.

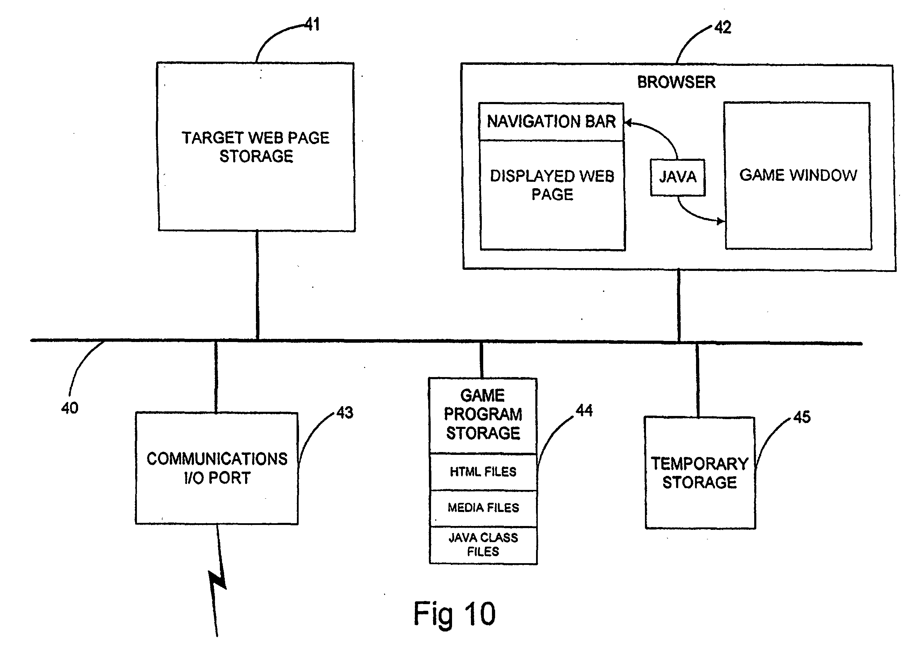

Figure 10 illustrates the structure of a user's computer in accordance with an embodiment of the present invention wherein the web pages are provided locally.

The components of the system are interconnected via a data and controlled bus 40. A communications I/O port 43 is provided for downloading software and for possibly uploading game status information to a game server. This is not however essential. A game program storage medium is provided storing HTML files the media files and the Java class files. A browser 42 is provided which generates a displayed web page and launches Java applets to generate a navigation bar and a game window. The HTML code and media files (and possibly Java class files) for the target web pages are stored in the target web page storage medium 41. These can thus be accessed locally by the browser 42. A temporary storage area 45 is provided for storing game status information and objects retrieved from the target web pages.

This embodiment can thus either be implemented as a method of teaching how to use a browser with local web pages, or it can be used to play a game wherein a prize is available for successful completion of this game. The successful completion of the game can for example, be automatically communicated to a remote game server using the communication I/O port 43.

### Examples of Games

### Crossword

In this game the game area 62 of the game window 60 displays a crossword and the clue/question area 61 displays crossword clues. The inventory area 63 displays words which have been collected from target web pages.

In order to select the row or column of the crossword to be answered, a user can click using a pointer over the desired number box. A clue corresponding to the selected row or column will then be displayed. The clue could be a graphical image or a usual crossword clue.

### MAZE

A two-dimensional or three-dimensional maze can be displayed in the game area. Within the maze certain "GATES" can be provided which comprise web sites to be visited to retrieve a particular object. Thus in order to navigate through the maze it is necessary to visit web sites and retrieve the specified object.

### CHESS

The game area can display a chess board which initially can have a number of chess pieces missing. In order for the game to be played it is necessary to collect chess pieces by navigating to certain web pages for which there may be clues provided. Thus a clue may direct a user to a web page and when the web page is downloaded, it is modified by the Java applet to include a displayed chess piece which can be retrieved in place of the inventory. The player can then move the chess piece to the correct position on the board. Once all of the chess pieces are collected either the game will play automatically to a conclusion, or a player can be required to play the game to a successful conclusion against the computer.

### JIGSAW PUZZLES

The game area initially displays an image. This could be required to be retrieved by a player from a specific web site based on a clue. Once the image has been retrieved a jigsaw outline is overlaid to the displayed image and the picture is then cut and "overcome as explained" from the window. Pieces are then scattered either around the web site from which the picture came, or at multiple web sites. In order to find each piece the user has to have a clue as to their whereabouts.

The pieces can be found in a number of ways:
1. The clue points to the page location and the pieces are visible on the page i.e. it has been added via the Java applet;
2. The clue points to an object e.g. a picture on the page and the user has to click on that object to reveal the jigsaw piece; and
3. The clue points to an object e.g. an image on the page and the user has to retrieve the object into the inventory whereupon it is translated into a jigsaw piece.

## Claims

1. A computer comprising:
(a) a browser program stored in said computer for retrieving information from remote websites;
(b) a monitoring program stored in said computer for monitoring information retrieved by said browser program, said monitoring program comprising:
i) means for storing data identifying a plurality of items of information;
ii) means for comparing the stored identifying data with data identifying items of information retrieved by the browser program from remote websites; and
iii) means for making a record comprising the identity of remote websites from which the browser has retrieved information determined by the comparing means to correspond to identifying data stored by the storing means;
(c) transmission program means which is operable as a result of execution of the monitoring program to transmit said record to a remote server.

2. A computer according to claim 1, wherein said storing means is arranged to store data identifying web addresses of remote websites, and said comparing means is arranged to compare the stored identifying data with web addresses of remote websites from which the browser program retrieves information.

3. A computer according to claim 1 or 2, wherein said storing means is arranged to store data identifying specific items of information which may be contained in web pages, and said comparing means is arranged to compare said stored identifying data with information contained in web pages retrieved by the browser program from remote websites.

4. A computer in accordance with any preceding claim wherein said monitoring program is operable to record the timing of retrieval of information identified by said record.

5. A computer in accordance with any preceding claim wherein said monitoring program further comprises means for associating user identification data with the retrieval of items of information by said browser program, and said responsive means is operable to record the retrieval of information retrieved by the browser which corresponds to stored identifying data in association with said user identification data.

6. A computer in accordance with claim 5, wherein said monitoring program further comprises means for preventing predetermined processing from occurring until said responsive means has recorded in association with the same user identification data the retrieval of information which corresponds to stored identifying data.

7. A computer in accordance with any of claims 1 to 5, wherein said monitoring program further comprises means for preventing predetermined processing from occurring unless said responsive means has made at least one predetermined said record.

8. A computer in accordance with any of claims 1 to 5, wherein said monitoring-program further comprises means for preventing predetermined processing from occurring unless said responsive means has made at least one predetermined said record within a predetermined time period.

9. A computer in accordance with any preceding claim wherein said monitoring program further comprises means operable to perform predetermined processing automatically subsequent to the making of a said record by said responsive means.

10. A computer according to any preceding claim, wherein said transmission program means is operable for periodically transmitting said record during execution of the monitoring program.

11. A computer according to any of claim 1 to 9, wherein said transmission program means is operable for transmitting said record when a user logs off from the monitoring program.

12. A computer according to any of claims 1 to 11, including sequence program means comprising:
data set definition means for defining a sequence of retrieval operations to be performed by said browser program corresponding to the retrieval of information identified by said identifying data; and
display generation means responsive to said comparing means to output display data identifying the next retrieval operation in the sequence defined by said data set definition means.

13. A computer according to claim 12, wherein said display generation means is responsive to said comparing means to generate a user interface incorporating means operable in response to user input to cause said computer to retrieve data from the remote website from which the next retrieval operation in said sequence is to be performed.

14. A computer network comprising:
a computer in accordance with any of claims 1 to 13;
a plurality of servers storing remote websites containing information;
a communications network enabling said computer to retrieve information from said remote websites;
wherein said storing means is arranged to store identifying data identifying information contained within said remote websites.

15. A data carrier carrying a monitoring program which is adapted for execution on a computer having a browser program stored thereon and which is for monitoring the retrieval, by the browser program, of information from remote websites, said monitoring program comprising:
means for storing data identifying a plurality of items of information;
comparing means which is adapted to co-operate with a browser program stored on the same computer as the monitoring program and which is operable for comparing the stored identifying data with data identifying items of information retrieved by the browser program from remote websites; and
means for making a record comprising the identity of remote websites from which the browser has retrieved information determined by the comparing means to correspond to identifying data stored by the storing means;
said data carrier further carrying transmission program means which is operable as a result of execution of the monitoring program for transmitting said record to a remote server.

16. A data carrier in accordance with claim 15, wherein said storing means is arranged to store data identifying web addresses of remote websites and said comparing means is arranged to compare the stored identifying data with web addresses of remote websites from which the browser program retrieves information.

17. A data carrier in accordance with claim 15 or 16 wherein said storing means is arranged to store data identifying specific items of information which may be contained in web pages and said comparing means is arranged to compare said stored identifying data with information contained in the web pages retrieved by said browser program from remote websites.

18. A data carrier in accordance with claim 15, 16 or 17 wherein said responsive means is operable to record the timing of retrieval of information identified by said record.

19. A data carrier in accordance with any of claims 15 to 18 which includes means for associating user identification data with the retrieval of items of information by said browser program, and said responsive means is operable to record the retrieval of information corresponds to stored identifying data in association with said user identification data.

20. A data carrier in accordance with claim 19, which includes means for preventing predetermined processing from occurring until said responsive means has recorded in association with the same user identification data the retrieval of information which corresponds to stored identifying data.

21. A data carrier in accordance with any of claims 15 to 19 which includes means for preventing predetermined processing from occurring unless said means responsive to the comparing means has made at least one predetermined said record.

22. A data carrier in accordance with any of claims 15 to 19, which includes means for preventing predetermined processing from occurring unless said responsive means has made at least one predetermined said record within a predetermined time period.

23. A data carrier in accordance with any of claims 15 to 21 which includes means operable to perform predetermined processing automatically subsequent to the making of a said record by said means responsive to the comparing means.

24. A data carrier according to any of claims 15 to 23, wherein said transmission program means is operable for periodically transmitting said record during execution of the monitoring program.

25. A data carrier according to any of claims 15 to 23, wherein said transmission program means is operable for transmitting said record when a user logs off from the monitoring program.

26. A data carrier in accordance with any of claims 15 to 25, further including sequence program means comprising:
data set definition means for defining a sequence of retrieval operations to be performed by said browser program corresponding to the retrieval of information identified by said identifying data; and
display generation means responsive to said comparing means to output display data identifying the next retrieval operation in the sequence defined by said data set definition means.

27. A data carrier in accordance with claim 26, wherein said display generation means is responsive to said comparing means to generate a user interface incorporating means operable in response to user input to cause said computer to retrieve data from the remote website from which the next retrieval operation in said sequence is to be performed.

28. A data carrier in accordance with any of claims 15 to 27 which is a data storage medium.

29. A data storage medium in accordance with claim 28, which is a magnetic, magneto-optical or optical disc.

30. A data carrier in accordance with any of claims 15 to 27 which is a signal in a communications network.

31. A computer system for accessing, and monitoring the retrieval of information from, a plurality of remote websites, comprising at least one user terminal and a server,
said at least one user terminal having stored thereon;
a browser program for retrieving information from the remote websites; and
transmission program means operable in response to operation of the browser program for transmitting to said server identifying data relating to items of information retrieved by the browser program and the identity of the remote websites from which said information has been retrieved;
and said server having stored thereon a monitoring program comprising:
means for storing data identifying a plurality of items of information;
means for comparing the stored identifying data with said identifying data transmitted to the server by said transmission program means; and
means for making a record relating to the identity of remote websites from which the browser has retrieved information determined by the comparing means to correspond to identifying data stored by the storing means.

32. A computer system according to claim 31, wherein said transmission program means is operable to transmit identifying data comprising data identifying web addresses of remote websites, said storing means is arranged to store data identifying web addresses of remote websites, and said comparing means is arranged to compare the stored identifying data with web addresses transmitted by said transmission program means.

33. A computer system according to claim 31 or 32, wherein said transmission program means is operable to transmit identifying data comprising data identifying specific items of information contained in web pages retrieved by a browser program and said storing means is arranged to store data identifying specific items of information which may be contained in web pages, and said comparing means is arranged to compare said stored identifying data with data identifying information contained in web pages retrieved by a browser program from remote websites, transmitted by said transmission program means.

34. A computer system in accordance with any of claims 31 to 33 wherein said means for making a record is operable to record the timing of retrieval of information identified by said record.

35. A computer system in accordance with any of claims. 31 to 34 wherein said monitoring program further comprises means for associating user identification data with the retrieval of items of information by said browser program, and said means for making a record is operable to record the retrieval of information retrieved by the browser which corresponds to stored identifying data in association with said user identification data.

36. A computer system in accordance with claim 35, wherein said monitoring program further comprises means for preventing predetermined processing from occurring until said means for making a record has recorded in association with the same user identification data the retrieval of information which corresponds to stored identifying data.

37. A computer system in accordance with any of claims 31 to 35, wherein said monitoring program further comprises means for preventing predetermined processing from occurring unless said means for making a record has made at least one predetermined said record.

38. A computer system in accordance with any of claims 31 to 35, wherein said monitoring program further comprises means for preventing predetermined processing from occurring unless said means for making a record has made at least one predetermined said record within a predetermined time period.

39. A computer system in accordance with any of claims 31 to 38 wherein said monitoring program further comprises means operable to perform predetermined processing automatically subsequent to the making of a said record by said means for making a record.

40. A computer system according to any of claims 31 to 39, including sequence program means comprising:
data set definition means for defining a sequence of retrieval operations to be performed by a browser program corresponding to the retrieval of information identified by said identifying data; and
display generation means responsive to said comparing means to output display data identifying the next retrieval operation in the sequence defined by said data set definition means.

41. A computer system according to claim 40, wherein said display generation means is responsive to said comparing means to generate a user interface incorporating means operable in response to user input to cause said computer to retrieve data from the remote website from which the next retrieval operation in said sequence is to be performed.

42. A server having stored thereon a monitoring program comprising:
means for storing data identifying a plurality of items of information;
receiving means for receiving, from a remote user terminal, identifying data related to items of information retrieved by a browser program of the remote user terminal and the identity of the remote websites from which said information has been retrieved;
means for comparing the stored identifying data with said identifying data received by the receiving means; and
means for making a record related to the identity of remote websites from which the browser has retrieved information determined by the comparing means to correspond to identifying data stored by the storing means.

43. A server according to claim 42, wherein said storing means is arranged to store data identifying web addresses of remote websites, and said comparing means is arranged to compare the stored identifying data with data identifying web addresses of remote websites received by said receiving means.

44. A server according to claim 42 or 43, wherein said storing means is arranged to store data identifying specific items of information which may be contained in web pages, and said comparing means is arranged to compare said stored identifying data with data identifying specific items of information contained in web pages received by said receiving means.

45. A server in accordance with any of claims 42 to 44, wherein said means for making a record is operable to record the timing of retrieval of information identified by said record.

46. A server in accordance with any of claims 42 to 45, wherein said monitoring program further comprises means for associating user identification data with the retrieval of items of information by a browser program, and said means for making a record is operable to record the retrieval of information retrieved by the browser which corresponds to stored identifying data in association with said user identification data.

47. A server in accordance with claim 46, wherein said monitoring program further comprises means for preventing predetermined processing from occurring until said means for making a record has recorded in association with the same user identification data the retrieval of information which corresponds to stored identifying data.

48. A server in accordance with any of claims 42 to 46, wherein said monitoring program further comprises means for preventing predetermined processing from occurring unless said means for making a record has made at least one predetermined said record.

49. A server in accordance with any of claims 42 to 46, wherein said monitoring program further comprises means for preventing predetermined processing from occurring unless said means for making a record has made at least one predetermined said record within a predetermined time period.

50. A server in accordance with any of claims 42 to 49, wherein said monitoring program further comprises means operable to perform predetermined processing automatically subsequent to the making of a said record by said means for making a record.

51. A server according to any of claims 42 to 50, including sequence program means comprising:
data set definition means for defining a sequence of retrieval operations to be performed by a browser program corresponding to the retrieval of information identified by said identifying data; and
display generation means responsive to said comparing means to output display data identifying the next retrieval operation in the sequence defined by said data set definition means.

52. A server according to claim 51, wherein said display generation means is responsive to said comparing means to generate a user interface incorporating means operable in response to user input to cause said computer to retrieve data from the remote website from which the next retrieval operation in said sequence is to be performed.

53. A server according to claim 42 further comprising means responsive to a command from a remote computer for outputting a signal comprising said monitoring program and said transmission program means, to enable downloading thereof to a remote computer;
transmission program means operable as a result of execution of the monitoring program to transmit a said record to a remote server; and
means responsive to a command from a remote computer for outputting a signal comprising said monitoring program and said transmission program means to enable downloading thereof.

## Patentansprüche

1. Computer, aufweisend:
(a) ein in dem Computer gespeichertes Browser-Programm zum Gewinnen von Informationen von entfernten Webseiten,
(b) ein in dem Computer gespeichertes Überwachungsprogramm zum Überwachen von von dem Browser-Programm gewonnenen Informationen, wobei das Überwachungsprogramm aufweist:
i) eine Einrichtung zum Speichern von Daten, die mehrere Informationseinheiten identifizieren,
ii) eine Einrichtung zum Vergleichen der gespeicherten Identifikationsdaten mit Daten, die Informationseinheiten identifizieren, die von dem Browser-Programm von entfernten Webseiten gewonnen wurden, und
iii) eine Einrichtung zur Anfertigung einer Aufzeichnung, die die Identität von entfernten Webseiten enthält, von denen der Browser Informationen gewonnen hat, die von der Vergleichseinrichtung als den von der Speichereinrichtung gespeicherten Identifikationsdaten entsprechend bestimmt wurden,
(c) eine Übertragungsprogrammeinrichtung, die als Ergebnis der Ausführung des Überwachungsprogramms betreibbar ist, die genannte Aufzeichnung an einen entfernten Server zu übermitteln.

2. Computer nach Anspruch 1, wobei die Speichereinrichtung zur Speicherung von Daten eingerichtet ist, die Webadressen von entfernten Webseiten identifizieren, und die Vergleichseinrichtung eingerichtet ist, die gespeicherten Identifikationsdaten mit Webadressen entfernter Webseiten zu vergleichen, von denen das Browser-Programm Informationen gewinnt.

3. Computer nach Anspruch 1 oder 2, wobei die Speichereinrichtung zur Speicherung von Daten eingerichtet ist, die bestimmte Informationseinheiten identifizieren, die in Webseiten enthalten sein können, und die Vergleichseinrichtung eingerichtet ist, die gespeicherten Identifikationsdaten mit Informationen zu vergleichen, die in Webseiten enthalten sind, die von dem Browser-Programm von entfernten Webseiten gewonnen wurden.

4. Computer nach einem der vorhergehenden Ansprüche, wobei das Überwachungsprogramm betreibbar ist, die Zeit der Gewinnung von durch die Aufzeichnung identifizierten Informationen aufzuzeichnen.

5. Computer nach einem der vorhergehenden Ansprüche, wobei das Überwachungsprogramm außerdem eine Einrichtung zum Zuordnen von Benutzeridentifikationsdaten zur Gewinnung von Informationseinheiten durch das Browser-Programm enthält und die ansprechende Einrichtung betreibbar ist, die Gewinnung von durch den Browser gewonnenen Informationen, die gespeicherten Identifikationsdaten entsprechen, in Zuordnung zu den Benutzeridentifikationsdaten aufzuzeichnen.

6. Computer nach Anspruch 5, wobei das Überwachungsprogramm außerdem eine Einrichtung aufweist, um das Auftreten einer vorbestimmten Verarbeitung zu verhindern, bis die ansprechende Einrichtung die Gewinnung von Informationen, die gespeicherten Identifikationsdaten entsprechen, in Zuordnung zu den gleichen Benutzeridentifikationsdaten-aufgezeichnet hat.

7. Computer nach einem der Ansprüche 1 bis 5, wobei das Überwachungsprogramm außerdem eine Einrichtung aufweist, um das Auftreten einer vorbestimmten Verarbeitung zu verhindern, bis die ansprechende Einrichtung mindestens eine vorbestimmte solche Aufzeichnung angefertigt hat.

8. Computer nach einem der Ansprüche 1 bis 5, wobei das Überwachungsprogramm außerdem eine Einrichtung aufweist, um das Auftreten einer vorbestimmten Verarbeitung zu verhindern, bis die ansprechende Einrichtung innerhalb einer vorbestimmten Zeitspanne mindestens eine vorbestimmte solche Aufzeichnung angefertigt hat.

9. Computer nach einem der vorhergehenden Ansprüche, wobei das Überwachungsprogramm außerdem eine Einrichtung aufweist, die zur automatischen Durchführung einer vorbestimmten Verarbeitung im Anschluß an die Anfertigung einer solchen Aufzeichnung durch die ansprechende Einrichtung betreibbar ist.

10. Computer nach einem der vorhergehenden Ansprüche, wobei die Übertragungsprogrammeinrichtung zur periodischen Übermittlung der Aufzeichnung während der Ausführung des Oberwachungsprogramms betreibbar ist.

11. Computer nach einem der Ansprüche 1 bis 9, wobei die Übertragungsprogrammeinrichtung, zur Übermittlung der Aufzeichnung wenn sich ein Benutzer aus dem Überwachungsprogramm ausloggt, betreibbar ist.

12. Computer nach einem der Ansprüche 1 bis 11 mit einer Ablaufprogrammeinrichtung, die folgendes aufweist:
eine Datensatz-Definitionseinrichtung zur Definition einer Abfolge von Gewinnungsoperationen, die von dem Browser-Programm durchgeführt werden sollen, entsprechend der Gewinnung von Informationen, die von den Identifikationsdaten identifiziert werden, und
eine Anzeigeerzeugungseinrichtung, die auf die Vergleichseinrichtung anspricht, um Anzeigedaten auszugeben, die die nächste Gewinnungsoperation in der von der Datensatz-Definitionseinrichtung definierten Abfolge identifizieren.

13. Computer nach Anspruch 12, wobei die Anzeigeerzeugungseinrichtung auf die Vergleichseinrichtung anspricht, um ein Benutzerinterface zu erzeugen, das eine Einrichtung beinhaltet, die in Reaktion auf eine Benutzereingabe so betreibbar ist, daß sie den Computer veranlaßt, Daten von der entfernten Webseite zu gewinnen, von der in der genannten Abfolge die nächste Gewinnungsoperation durchgeführt werden soll.

14. Computernetzwerk, aufweisend
einen Computer nach einem der Ansprüche 1 bis 13,
mehrere Server, die entfernte Webseiten mit Informationen speichern,
ein Kommunikationsnetzwerk, das dem Computer erlaubt, Informationen von den entfernten Webseiten zu gewinnen,
wobei die Speichereinrichtung eingerichtet ist, Identifikationsdaten zu speichern, die Informationen identifizieren, die in den entfernten Webseiten enthalten sind.

15. Datenträger mit einem Überwachungsprogramm, das zur Ausführung auf einem Computer eingerichtet ist, auf dem ein Browser-Programm gespeichert ist, und das der Überwachung der Gewinnung von Informationen von entfernten Webseiten durch das Browser-Programm dient, wobei das Überwachungsprogramm folgendes aufweist:
eine Einrichtung zum Speichern von Daten, die mehrere Informationseinheiten identifizieren,
eine Vergleichseinrichtung, die zur Zusammenarbeit mit einem auf dem gleichen Computer wie das Überwachungsprogramm gespeicherten Browser-Programm eingerichtet und zum Vergleich der gespeicherten Identifikationsdaten mit Daten betreibbar ist, die Informationseinheiten identifizieren, die durch das Browser-Programm von entfernten Webseiten gewonnen wurden, und
eine Einrichtung zur Erstellung einer Aufzeichnung, die die Identität entfernter Webseiten enthält, von denen der Browser Informationen gewonnen hat, die von der Vergleichseinrichtung als den von der Speichereinrichtung gespeicherten Identifikationsdaten entsprechend bestimmt wurden,
wobei der Datenträger außerdem eine Übertragungsprogrammeinrichtung aufweist, die als Ergebnis der Ausführung des Überwachungsprogramms betreibbar ist, um die genannte Aufzeichnung an einen entfernten Server zu übermitteln.

16. Datenträger nach Anspruch 15, wobei die Speichereinrichtung eingerichtet ist, Daten zu speichern, die Webadressen von entfernten Webseiten identifizieren, und die Vergleichseinrichtung eingerichtet ist, die gespeicherten Identifikationsdaten mit Webadressen von entfernten Webseiten zu vergleichen, von denen das Browser-Programm Informationen gewinnt.

17. Datenträger nach Anspruch 15 oder 16, wobei die Speichereinrichtung eingerichtet ist, Daten zu speichern, die bestimmte Informationseinheiten identifizieren, die in Webseiten enthalten sein können, und die Vergleichseinrichtung eingerichtet ist, die gespeicherten Informationsdaten mit Informationen zu vergleichen, die in Webseiten enthalten sind, die von dem Browser-Programm von entfernten Webseiten gewonnen wurden.

18. Datenträger nach Anspruch 15, 16 oder 17, wobei die ansprechende Einrichtung zur Aufzeichnung der Zeit des Gewinnens von Informationen eingerichtet ist, die von der Aufzeichnung identifiziert sind,

19. Datenträger nach einem der Ansprüche 15 bis 18 mit einer Einrichtung zur Zuordnung von Benutzeridentifikationsdaten zur Gewinnung von Informationseinheiten durch das Browser-Programm, wobei die ansprechende Einrichtung zur Aufzeichnung des Gewinnens von Informationen, die gespeicherten Identifikationsdaten entsprechen, in Zuordnung zu den Benutzeridentifikationsdaten betreibbar ist.

20. Datenträger nach Anspruch 19 mit einer Einrichtung zum Verhindern des Auftretens einer vorbestimmten Verarbeitung, bis die ansprechende Einrichtung in Zuordnung zu den gleichen Benutzeridentifikationsdaten die Gewinnung von Informationen aufgezeichnet hat, die den gespeicherten Identifikationsdaten entsprechen.

21. Datenträger nach einem der Ansprüche 15 bis 19 mit einer Einrichtung zum Verhindern des Auftretens einer vorbestimmten Verarbeitung, bis die auf die Vergleichseinrichtung ansprechende Einrichtung mindestens eine vorbestimmte solche Aufzeichnung erstellt hat.

22. Datenträger nach einem der Ansprüche 15 bis 19 mit einer Einrichtung zum Verhindern des Auftretens einer vorbestimmten Verarbeitung, bis die ansprechende Einrichtung innerhalb einer vorbestimmten Zeitspanne mindestens eine vorbestimmte solche Aufzeichnung erstellt hat.

23. Datenträger nach einem der Ansprüche 15 bis 21 mit einer Einrichtung, die zur automatischen Ausführung einer vorbestimmten Verarbeitung im Anschluß an die Erstellung der genannten Aufzeichnung durch die auf die Vergleichseinrichtung ansprechende Einrichtung betreibbar ist.

24. Datenträger nach einem der Ansprüche 15 bis 23, wobei die Übertragungsprogrammeinrichtung zur periodischen Übertragung der Aufzeichnung während der Ausführung des Überwachungsprogramms betreibbar ist.

25. Datenträger nach einem der Ansprüche 15 bis 23, wobei die Übertragungsprogrammeinrichtung zur Übertragung der Aufzeichnung, wenn sich ein Benutzer aus dem Überwachungsprogramm ausloggt, betreibbar ist.

26. Datenträger nach einem der Ansprüche 15 bis 25 mit einer Ablaufprogrammeinrichtung, die folgendes aufweist:
eine Datensatz-Definitionseinrichtung zur Definition eines Ablaufs von Gewinnungsoperationen, die von dem Browser-Programm ausgeführt werden sollen, entsprechend der Gewinnung von Informationen, die durch die Identifikationsdaten identifiziert werden, und
eine Anzeigeerzeugungseinrichtung, die auf die Vergleichseinrichtung anspricht, um Anzeigedaten auszugeben, die die nächste Gewinnungsoperation in der von der Datensatz-Definitionseinrichtung definierten Abfolge identifizieren.

27. Datenträger nach Anspruch 26, wobei die Anzeigeerzeugungseinrichtung auf die Vergleichseinrichtung anspricht, um ein Benutzerinterface zu erzeugen, das eine Einrichtung beinhaltet, die in Reaktion auf eine Benutzereingabe so betreibbar ist, daß sie den Computer veranlaßt, Daten von der entfernten Webseite zu gewinnen, von der die nächste Gewinnungsoperation in der genannten Abfolge ausgeführt werden soll.

28. Datenträger nach einem der Ansprüche 15 bis 27, der ein Datenspeichermedium darstellt.

29. Datenspeichermedium nach Anspruch 28, das eine magnetische, eine magneto-optische oder eine optische Platte darstellt.

30. Datenträger nach einem der Ansprüche 15 bis 27, der ein Signal in einem Kommunikationsnetzwerk darstellt.

31. Computersystem zum Zugriff auf und zur Überwachung der Gewinnung von Informationen von einer Vielzahl entfernter Webseiten, mit mindestens einem Benutzerterminal und einem Server,
wobei auf dem mindestens einen Benutzerterminal folgendes gespeichert ist:
ein Browser-Programm zur Gewinnung von Informationen von den entfernten Webseiten, und
eine Übertragungsprogrammeinrichtung, die ansprechend auf den Betrieb des Browser-Programms zur Übermittlung von Identifikationsdaten, die von dem Browser-Programm gewonnene Informationseinheiten betreffen, und zur Übermittlung der Identität der entfernten Webseiten, von denen die Informationen gewonnen wurden, an den Server betreibbar ist,
und wobei auf dem Server ein Überwachungsprogtamm gespeichert ist, das folgendes aufweist:
eine Einrichtung zum Speichern von Daten, die mehrere Informationseinheiten identifizieren,
eine Einrichtung zum Vergleichen der gespeicherten Identifikationsdaten mit den von der Übertragungsprogrammeinrichtung an den Server übermittelten Identifikationsdaten, und
eine Einrichtung zur Erstellung einer Aufzeichnung über die Identität entfernter Webseiten, von denen der Browser Informationen gewonnen hat, die von der Vergleichseinrichtung als den von der Speichereinrichtung gespeicherten Identifikationsdaten entsprechend bestimmt wurden.

32. Computersystem nach Anspruch 31, wobei die Übertragungsprogrammeinrichtung zur Übermittlung von Identifikationsdaten betreibbar ist, die Daten enthalten, die Webadressen von entfernten Webseiten identifizieren, wobei die Speichereinrichtung zur Speicherung von Daten eingerichtet ist, die Webadressen entfernter Webseiten identifizieren, und wobei die Vergleichseinrichtung zum Vergleich der gespeicherten Identifikationsdaten mit von der Übertragungsprogrammeinrichtung übermittelten Webadressen eingerichtet ist.

33. Computersystem nach Anspruch 31 oder 32, wobei die übertragungsprogrammeinrichtung zur Übertragung von Identifikationsdaten betreibbar ist, die Daten enthalten, die bestimmte Informationseinheiten identifizieren, die in Webseiten enthalten sind, die von einem Browser-Programm gewonnen werden, und wobei die Speichereinrichtung zur Speicherung von Daten eingerichtet ist, die bestimmte Informationseinheiten identifizieren, die in Webseiten enthalten sein können, und wobei die Vergleichseinrichtung zum Vergleich der gespeicherten Identifikationsdaten mit Daten eingerichtet ist, die Informationen identifizieren, die in Webseiten enthalten sind, die von einem Browser-Programm von entfernten Webseiten gewonnen werden, und wie sie von der Übertragungsprogrammeinrichtung übermittelt werden.

34. Computersystem nach einem der Ansprüche 31 bis 33, wobei die Einrichtung zur Erstellung einer Aufzeichnung zur Aufzeichnung der Zeit der Gewinnung von von der Aufzeichnung identifizierten Informationen betreibbar ist.

35. Computersystem nach einem der Ansprüche 31 bis 34, wobei das Überwachungsprogramm außerdem eine Einrichtung zur Zuordnung von Benutzeridentifikationsdaten zur Gewinnung von Informationseinheiten durch das Browser-Programm enthält und die Einrichtung zur Erstellung einer Aufzeichnung zur Aufzeichnung der Gewinnung von Informationen, die von dem Browser gewonnen werden und gespeicherten Identifikationsdaten entsprechen, in Zuordnung zu den Benutzeridentifikationsdaten betreibbar ist.

36. Computersystem nach Anspruch 35, wobei das Überwachungsprogramm außerdem eine Einrichtung aufweist, um das Auftreten einer vorbestimmten Verarbeitung zu verhindern, bis die Einrichtung zur Erstellung einer Aufzeichnung die Gewinnung von Informationen, die gespeicherten Identifikationsdaten entsprechen, in Zuordnung zu den gleichen Benutzeridentifikationsdaten aufgezeichnet hat.

37. Computersystem nach einem der Ansprüche 31 bis 35, wobei das Überwachungsprogramm außerdem eine Einrichtung aufweist, um das Auftreten einer vorbestimmten Verarbeitung zu verhindern, bis die Einrichtung zur Erstellung einer Aufzeichnung mindestens eine vorbestimmte solche Aufzeichnung erstellt hat.

38. Computersystem nach einem der Ansprüche 31 bis 35, wobei das Überwachungsprogramm außerdem eine Einrichtung aufweist, um das Auftreten einer vorbestimmten Verarbeitung zu verhindern, bis die Einrichtung zur Erstellung einer Aufzeichnung innerhalb einer vorbestimmten Zeitspanne mindestens eine vorbestimmte solche Aufzeichnung erstellt hat.

39. Computersystem nach einem der Ansprüche 31 bis 38, wobei das Überwachungsprogramm außerdem eine Einrichtung aufweist, die betreibbar ist, im Anschluß an die Erstellung einer Aufzeichnung durch die Einrichtung zur Erstellung einer Aufzeichnung automatisch eine vorbestimmte Verarbeitung auszuführen.

40. Computersystem nach einem der Ansprüche 31 bis 39 mit einer Ablaufprogrammeinrichtung, die folgendes aufweist:
eine Datensatz-Definitionseinrichtung zur Definition einer Abfolge von Gewinnungsoperationen, die von einem Browser-Programm ausgeführt werden sollen, entsprechend der Gewinnung von Informationen, die durch die Identifikationsdaten identifiziert werden, und
eine Anzeigeerzeugungseinrichtung, die auf die Vergleichseinrichtung anspricht, um Anzeigedaten auszugeben, die die nächste Gewinnungsoperation in der von der Datensatz-Definitionseinrichtung definierten Abfolge identifizieren.

41. Computersystem nach Anspruch 40, wobei die Anzeigeerzeugungseinrichtung auf die Vergleichseinrichtung anspricht, um ein Benutzerinterface zu erzeugen, das eine Einrichtung beinhaltet, die in Antwort auf eine Benutzereingabe betreibbar ist, um den Computer zu veranlassen, Daten von der entfernten Webseite zu gewinnen, von der die nächste Gewinnungsoperation in der Abfolge ausgeführt werden soll.

42. Server mit einem darauf gespeicherten Überwachungsprogramm, aufweisend:
eine Einrichtung zum Speichern von Daten, die mehrere Informationseinheiten identifizieren,
eine Empfangseinrichtung, um von einem entfernten Benutzerterminal Identifikatibnsdaten mit Bezug zu Informationseinheiten, die von einem Browser-Programm des entfernten Benutzerterminals gewonnen wurden, und die Identität der entfernten Webseiten, von denen die Informationen gewonnen wurden, zu empfangen,
eine Einrichtung zum Vergleichen der gespeicherten Identifikationsdaten mit den von der Empfangseinrichtung empfangenen Identifikationsdaten, und
eine Einrichtung zur Erstellung einer Aufzeichnung über die Identität entfernter Webseiten, von denen der Browser Informationen gewonnen hat, die von der Vergleichseinrichtung als mit von der Speichereinrichtung gespeicherten Identifikationsdaten entsprechend bestimmt wurden.

43. Server nach Anspruch 42, wobei die Speichereinrichtung zur Speicherung von Daten eingerichtet ist, die Webadressen entfernter Webseiten identifizieren, und die Vergleichseinrichtung zum Vergleich der gespeicherten Identifikationsdaten mit Daten eingerichtet ist, die Webadressen entfernter Webseiten identifizieren, die von der Empfangseinrichtung empfangen werden.

44. Server nach Anspruch 42 oder 43, wobei die Speichereinrichtung zur Speicherung von Daten eingerichtet ist, die bestimmte Informationseinheiten identifizieren, die in Webseiten enthalten sein können, und die Vergleichseinrichtung zum Vergleich der gespeicherten Identifikationsdaten mit Daten eingerichtet ist, die bestimmte Informationseinheiten identifizieren, die in Webseiten enthalten sind, die von der Empfangseinrichtung empfangen werden.

45. Server nach einem der Ansprüche 42 bis 44, wobei die Einrichtung zur Erstellung einer Aufzeichnung zur Aufzeichnung der Zeit des Gewinnens von Informationen eingerichtet ist, die von der Aufzeichnung identifiziert werden.

46. Server nach einem der Ansprüche 42 bis 45, wobei das Überwachungsprogramm außerdem eine Einrichtung zum Zuordnen von Benutzeridentifikationsdaten zur Gewinnung von Informationseinheiten durch ein Browser-Programm enthält und die Einrichtung zur Erstellung einer Aufzeichnung zur Aufzeichnung der Gewinnung von von dem Browser gewonnenen Informationen, die gespeicherten Identifikationsdaten entsprechen, in Zuordnung zu den Benutzeridentifikationsdaten betreibbar ist.

47. Server nach Anspruch 46, wobei das Überwachungsprogramm außerdem eine Einrichtung aufweist, um das Auftreten einer vorbestimmten Verarbeitung zu verhindern, bis die Einrichtung zur Erstellung einer Aufzeichnung in Zuordnung zu den gleichen Benutzeridentifikationsdaten die Gewinnung von den gespeicherten Identifikationsdäten entsprechenden Informationen aufgezeichnet hat.

48. Server nach einem der Ansprüche 42 bis 46, wobei das Überwachungsprogramm außerdem eine Einrichtung aufweist, um das Auftreten einer vorbestimmten Verarbeitung zu verhindern, bis die Einrichtung zur Erstellung einer Aufzeichnung mindestens eine vorbestimmte solche Aufzeichnung erstellt hat.

49. Server nach einem der Ansprüche 42 bis 46, wobei das Überwachungsprogramm außerdem eine Einrichtung aufweist, um das Auftreten einer vorbestimmten Verarbeitung zu verhindern, bis die Einrichtung zur Erstellung einer Aufzeichnung innerhalb einer vorbestimmten Zeitspanne mindestens eine vorbestimmte solche Aufzeichnung erstellt hat.

50. Server nach einem der Ansprüche 42 bis 49, wobei das Überwachungsprogramm außerdem eine Einrichtung aufweist, die zur automatischen Durchführung einer vorbestimmten Verarbeitung im Anschluß an die Erstellung der Aufzeichnung durch die Einrichtung zur Erstellung einer solchen Aufzeichnung betreibbar ist.

51. Server nach einem der Ansprüche 42 bis 50 mit einer Abfolgeprogrammeinrichtung, die folgendes aufweist:
eine Datensatz-Definitionseinrichtung zur Definition einer Abfolge von Gewinnungsoperationen, die von einem Browser-Programm ausgeführt werden sollen, entsprechend der Gewinnung von durch die Identifikationsdaten identifizierten Informationen, und
eine Anzeigeerzeugungseinrichtung, die auf die Vergleichseinrichtung anspricht, um Anzeigedaten auszugeben, die die nächste Gewinnungsoperation in der von der Datensatz-Definitionseinrichtung definierten Abfolge identifizieren.

52. Server nach Anspruch 51, wobei die Anzeigeerzeugungseinrichtung auf die Vergleichseinrichtung anspricht, um ein Benutzerinterface zu erzeugen, das eine Einrichtung beinhaltet, die in Reaktion auf eine Benutzereingabe betreibbar ist, um einen Computer zu veranlassen, Daten von der entfernten Webseite zu gewinnen, von der die nächste Gewinnungsoperation in der Abfolge durchgeführt werden soll.

53. Server nach Anspruch 42, weiterhin aufweisend:
eine auf einen Befehl von einem entfernten Computer ansprechende Einrichtung zur Ausgabe eines Signals mit dem Überwachungsprogramm und der Übertragungsprogrammeinrichtung, um deren Download zum entfernten Computer zu ermöglichen;
eine Übertragungsprogrammeinrichtung, die als Ergebnis der Ausführung des Überwachungsprogramms betreibbar ist, um die Aufzeichnung an einen entfernten Server zu übermitteln; und
eine auf einen Befehl von einem entfernten Computer ansprechende Einrichtung, zur Ausgabe eines Signals mit dem Überwachungsprogramm und der Übertragungsprogrammeinrichtung anspricht, um deren Download zu ermöglichen.

## Revendications

1. Un ordinateur comprenant :
(a) un programme de navigation stocké dans ledit ordinateur pour récupérer des informations à partir de sites web éloignés ;
(b) un programme de surveillance stocké dans ledit ordinateur pour surveiller les informations récupérées par ledit programme de navigation, ledit programme de surveillance comprenant :
i) des moyens pour stocker des données identifiant une pluralité d'éléments d'information ;
ii) des moyens pour comparer les données d'identification stockées avec des données identifiant des éléments d'information récupérés par le programme de navigation à partir des sites web éloignés ; et
iii) des moyens pour effectuer un enregistrement comprenant l'identité des sites web éloignés à partir desquels le navigateur a récupéré des informations déterminées par les moyens de comparaison comme correspondant à des données d'identification stockées par les moyens de stockage ;
c) des moyens formant programme de transmission susceptible de fonctionner comme résultat de l'exécution du programme de surveillance pour transmettre ledit enregistrement à un serveur éloigné.

2. Un ordinateur selon la revendication 1, dans lequel lesdits moyens de stockage sont agencés pour stocker des données identifiant des adresses web pour des sites web éloignés, et lesdits moyens de comparaison sont agencés pour comparer les données d'identification stockées avec des adresses web des sites web éloignés à partir desquels le programme de navigation récupère des informations.

3. Un ordinateur selon la revendication 1 ou 2, dans lequel lesdits moyens de stockage sont agencés pour stocker des données identifiant des éléments spécifiques d'informations pouvant être contenues dans des pages web, et lesdits moyens de comparaison sont agencés pour comparer lesdites données d'identification stockées avec des informations contenues dans les pages web récupérées par le programme de navigation à partir de sites web éloignés.

4. Un ordinateur selon l'une quelconque des revendications précédentes, dans lequel lesdits moyens sensibles peuvent fonctionner pour enregistrer l'heure de récupération d'informations identifiées par ledit enregistrement.

5. Un ordinateur selon l'une quelconque des revendications précédentes, dans lequel ledit programme de surveillance comprend en outre des moyens pour associer des données d'identification d'utilisateur avec la récupération d'éléments d'information par ledit programme de navigation, et lesdits moyens sensibles peuvent fonctionner pour enregistrer la récupération d'informations récupérées par le navigateur qui correspondent à des données d'identification stockées en association avec lesdites données d'identification d'utilisateur.

6. Un ordinateur selon la revendication 5, dans lequel ledit programme de surveillance comprend en outre des moyens pour empêcher la réalisation d'un traitement prédéterminé jusqu'au moment où lesdits moyens sensibles ont enregistré, en association avec les mêmes données d'identification d'utilisateur, la récupération d'informations qui correspondent aux données d'identification stockées.

7. Un ordinateur selon l'une quelconque des revendications 1 à 5, dans lequel ledit programme de surveillance comprend en outre des moyens pour empêcher la réalisation d'un traitement prédéterminé à moins que lesdits moyens sensibles ont effectué au moins un desdits enregistrements prédéterminés.

8. Un ordinateur selon l'une quelconque des revendications 1 à 5, dans lequel ledit programme de surveillance comprend en outre des moyens pour empêcher la réalisation d'un traitement prédéterminé, à moins que lesdits moyens sensibles ont effectué au moins un enregistrement prédéterminé pendant une période de temps prédéterminée.

9. Un ordinateur selon l'une quelconque des revendications précédentes, dans lequel ledit programme de surveillance comprend en outre des moyens pouvant fonctionner pour effectuer automatiquement un traitement prédéterminé à la suite de la réalisation dudit enregistrement par lesdits moyens sensibles.

10. Un ordinateur selon l'une quelconque des revendications précédentes, dans lequel lesdits moyens formant programme de transmission peuvent fonctionner pour transmettre périodiquement ledit enregistrement lors de l'exécution dudit programme de surveillance.

11. Un ordinateur selon l'une quelconque des revendications 1 à 9, dans lequel lesdits moyens formant programme de transmission peuvent fonctionner pour transmettre ledit enregistrement lorsqu'un utilisateur se déconnecte du programme de surveillance.

12. Un ordinateur selon l'une quelconque des revendications 1 à 11, comprenant des moyens formant programme de séquencement comprenant :
- des moyens de définition d'un jeu de données pour définir une séquence d'opération de récupération à effectuer par ledit programme de navigation correspondant à la récupération de l'information identifiée par lesdites données d'identification ; et
- des moyens de génération d'affichage sensibles auxdits moyens de comparaison pour fournir en sortie des données d'affichage identifiant l'opération suivante de récupération de la séquence définie par lesdits moyens de définition de jeu de données.

13. Un ordinateur selon la revendication 12, dans lequel lesdits moyens de génération d'affichage sont sensibles auxdits moyens de comparaison pour générer une interface utilisateur incorporant des moyens susceptibles de fonctionner en réponse à des saisies d'utilisateur pour provoquer la récupération de données par ledit ordinateur à partir du site web éloignée où l'opération suivante de récupération de ladite séquence est à effectuer.

14. Un réseau informatique comprenant :
- un ordinateur selon l'une quelconque des revendications 1 à 13 ;
- une pluralité de serveurs qui stockent des sites web éloignés contenant des informations ;
- un réseau de communications permettant audit ordinateur de récupérer des informations à partir dudit site web éloigné ;
dans lequel lesdits moyens de stockage sont agencés pour stocker des données d'identification qui identifient les informations contenues dans lesdits sites web éloignés.

15. Un support de données comportant un programme de surveillance qui est adapté pour exécuter sur un ordinateur muni d'un programme de navigation stocké et qui sert à surveiller la récupération, par le programme de navigation, d'informations de sites web éloignés, ledit programme de surveillance comprenant :
- des moyens pour stocker des données identifiant une pluralité d'éléments d'information ;
- des moyens de comparaison qui sont adaptés pour coopérer avec un programme de navigation stocké sur le même ordinateur que le programme de surveillance et qui est capable de fonctionner pour comparer les données d'identification stockées avec les données identifiant les éléments d'information récupérés par le programme de navigation à partir des sites web éloignés ; et
- des moyens pour effectuer un enregistrement comprenant l'identité des sites web éloignés à partir desquels le navigateur a récupéré des informations déterminées par les moyens de comparaison pour correspondre à des données d'identification stockées par les moyens de stockage ;
ledit support de données comprenant en outre des moyens formant programme de transmission susceptibles de fonctionner suite à l'exécution du programme de surveillance, pour la transmission dudit enregistrement vers un serveur éloigné.

16. Un support de données selon la revendication 15, dans lequel lesdits moyens de stockage sont agencés pour stocker des données identifiant des adresses de sites web de sites web éloignés et lesdits moyens de comparaison sont agencés pour comparer les données d'identification stockées avec des adresses de sites web de sites web éloignés à partir desquelles le programme de navigation récupère des informations.

17. Un support de données selon la revendication 15 ou 16, dans lequel lesdits moyens de stockage sont agencés pour stocker des données identifiant des éléments spécifiques d'information pouvant être contenus dans des pages web et lesdits moyens de comparaison sont agencés pour comparer lesdites données d'identification stockées avec des informations contenues dans les pages web récupérées par ledit programme de navigation à partir de sites web éloignés.

18. Un support de données selon la revendication 15, 16 ou 17, dans lequel lesdits moyens sensibles sont susceptibles de fonctionner pour enregistrer l'heure de récupération des informations identifiées par ledit enregistrement.

19. Un support de données selon l'une quelconque des revendications 15 à 18, qui comprend des moyens pour associer des données d'identification d'utilisateur avec la récupération d'éléments d'information par ledit programme de navigation, et lesdits moyens sensibles pouvant fonctionner pour enregistrer la récupération d'informations correspondant à des données d'identification stockées en association avec lesdites données d'identification d'utilisateur.

20. Un support de données selon la revendication 19, qui comprend des moyens pour empêcher la réalisation d'un traitement prédéterminé jusqu'au moment où lesdits moyens sensibles ont enregistré, en association avec les mêmes données d'identification d'utilisateur, la récupération d'informations qui correspondent à des données d'identification stockées.

21. Un support de données selon l'une quelconque des revendications 15 à 19, qui comprend des moyens pour empêcher la réalisation d'un traitement prédéterminé, à moins que lesdits moyens sensibles aux moyens de comparaison ont effectué au moins un dit enregistrement prédéterminé.

22. Un support de données selon l'une quelconque des revendications 15 à 19, qui comprend des moyens pour empêcher la réalisation d'un traitement prédéterminé à moins que lesdits moyens sensibles ont effectué au moins un dit enregistrement prédéterminé dans une période de temps prédéterminée.

23. Un support de données selon l'une quelconque des revendications 15 à 21, qui comprend des moyens susceptibles de fonctionner pour effectuer automatiquement un traitement prédéterminé à la suite de la réalisation dudit enregistrement par lesdits moyens sensibles auxdits moyens de comparaison.

24. Un support de données selon l'une quelconque des revendications 15 à 23, dans lequel lesdits moyens formant programme de transmission peuvent fonctionner pour transmettre périodiquement ledit enregistrement lors de l'exécution dudit programme de surveillance.

25. Un support de données selon l'une quelconque des revendications 15 à 23, dans lequel lesdits moyens formant programme de transmission peuvent fonctionner pour transmettre ledit enregistrement lorsqu'un utilisateur se déconnecte du programme de surveillance.

26. Un support de données selon l'une quelconque des revendications 15 à 25, comprenant des moyens formant programme de séquencement comprenant :
- des moyens de définition d'un jeu de données pour définir une séquence d'opération de récupération à effectuer par ledit programme de navigation correspondant à la récupération de l'information identifiée par lesdites données d'identification ; et
- des moyens de génération d'affichage sensibles auxdits moyens de comparaison pour fournir en sortie des données d'affichage identifiant l'opération suivante de récupération de la séquence définie par lesdits moyens de définition de jeu de données.

27. Un support de données selon la revendication 26, dans lequel lesdits moyens de génération d'affichage sont sensibles auxdits moyens de comparaison pour générer une interface utilisateur incorporant des moyens susceptibles de fonctionner en réponse à des saisies utilisateur pour provoquer la récupération de données par ledit support de données à partir du site web éloignée où l'opération suivante de récupération de ladite séquence est à effectuer.

28. Un support de données selon l'une quelconque des revendications 15 à 27, qui est un support de stockage de données.

29. Un support de stockage de données selon la revendication 28, qui est un disque magnétique, magnéto-optique ou optique.

30. Un support de données selon l'une quelconque des revendications 15 à 27, qui est un signal dans un réseau de communication.

31. Un système informatique pour accéder à et pour surveiller la récupération d'informations à partir d'une pluralité de sites web éloignés, comprenant au moins un terminal d'utilisateur et un serveur,
ledit au moins un terminal d'utilisateur ayant stocké en dedans ;
un programme de navigation pour récupérer des informations à partir des sites web éloignés ; et
des moyens formant programme de transmission susceptible de fonctionner en réponse à l'opération du programme de navigation pour transmettre vers ledit serveur des données d'identification concernant des éléments d'information récupérés par le programme de navigation et l'identité des sites web éloignés à partir desquels ladite information a été récupérée ;
et ledit serveur ayant stocké en dedans un programme de surveillance comprenant :
des moyens pour stocker des données identifiant une pluralité d'éléments d'information ;
des moyens pour comparer les données d'identification stockées avec lesdites données d'identification transmises vers le serveur par lesdits moyens formant programme de transmission ; et
des moyens pour effectuer un enregistrement concernant l'identité des sites web éloignés à partir desquels le navigateur a récupéré des informations déterminées par les moyens de comparaison comme correspondant à des données d'identification stockées par les moyens de stockage.

32. Un système informatique selon la revendication 31, dans lequel lesdits moyens formant programme de transmission peuvent fonctionner pour transmettre des données d'identification comprenant des données identifiant des adresses web de sites web éloignés, lesdits moyens de stockage étant agencés pour stocker des données identifiant des adresses web de sites web éloignés, et lesdits moyens de comparaison étant agencés pour comparer les données d'identification stockées avec des adresses web transmises par lesdits moyens formant programme de transmission.

33. Un système informatique selon la revendication 31 ou 32, dans lequel lesdits moyens formant programme de transmission peuvent fonctionner pour transmettre des données d'identification comprenant des données d'identification d'éléments spécifiques d'information contenue dans des pages web récupérées par un programme de navigation et lesdits moyens de stockage sont agencés pour stocker des données d'identification des éléments d'information spécifiques pouvant être contenue dans des pages web, et lesdits moyens de comparaison sont agencés pour comparer lesdites données d'identification stockées avec des données d'identification des informations contenues dans des pages web récupérées par un programme de navigation à partir de sites web éloignés, transmises par lesdits moyens formant programme de transmission.

34. Un système informatique selon l'une quelconque des revendications 31 à 33, dans lequel lesdits moyens pour effectuer l'enregistrement peut fonctionner pour enregistrer l'heure de la récupération d'informations identifiées par ledit enregistrement.

35. Un système informatique selon l'une quelconque des revendications 31 à 34, dans lequel ledit programme de surveillance comprend en outre des moyens pour associer des données d'identification d'utilisateur avec la récupération d'éléments d'information par ledit programme de navigation, et lesdits moyens sensibles peuvent fonctionner pour enregistrer la récupération d'informations récupérées par le navigateur qui correspondent à des données d'identification stockées en association avec lesdites données d'identification d'utilisateur.

36. Un système informatique selon la revendication 35, dans lequel ledit programme de surveillance comprend en outre des moyens pour empêcher la réalisation d'un traitement prédéterminé jusqu'au moment où lesdits moyens sensibles ont enregistré, en association avec les mêmes données d'identification d'utilisateur, la récupération d'informations qui correspondent aux données d'identification stockées.

37. Un système informatique selon l'une quelconque des revendications 31 à 35, dans lequel ledit programme de surveillance comprend en outre des moyens pour empêcher la réalisation d'un traitement prédéterminé à moins que lesdits moyens sensibles ont effectué au moins un desdits enregistrements prédéterminés.

38. Un système informatique selon l'une quelconque des revendications 31 à 35, dans lequel ledit programme de surveillance comprend en outre des moyens pour empêcher la réalisation d'un traitement prédéterminé, à moins que lesdits moyens sensibles ont effectué au moins un enregistrement prédéterminé pendant une période de temps prédéterminée.

39. Un système informatique selon l'une quelconque des revendications 31 à 38, dans lequel ledit programme de surveillance comprend en outre des moyens fonctionnant pour effectuer automatiquement un traitement prédéterminé suite à la réalisation de l'enregistrement par lesdits moyens pour effectuer un enregistrement.

40. Un système informatique selon l'une quelconque des revendications 31 à 39, comprenant des moyens formant programme de séquencement comprenant :
- des moyens de définition d'un jeu de données pour définir une séquence d'opération de récupération à effectuer par ledit programme de navigation correspondant à la récupération d'informations identifiées par lesdites données d'identification ; et
- des moyens de génération d'affichage sensibles auxdits moyens de comparaison pour fournir en sortie des données d'affichage identifiant l'opération suivante de récupération de la séquence définie par lesdits moyens de définition de jeu de données.

41. Un système informatique selon la revendication 40, dans lequel lesdits moyens de génération d'affichage sont sensibles auxdits moyens de comparaison pour générer une interface utilisateur incorporant des moyens susceptibles de fonctionner en réponse à des saisies d'utilisateur pour provoquer la récupération de données par ledit système informatique à partir du site web éloignée où l'opération suivante de récupération de ladite séquence est à effectuer.

42. Un serveur ayant stocké en dedans un programme de surveillance comprenant :
- des moyens pour stocker des données identifiant une pluralité d'éléments d'information;
- des moyens de réception pour recevoir, à partir d'un terminal d'utilisateur éloigné, des données d'identification concernant des éléments d'information récupérés par un programme de navigation du terminal d'utilisateur éloigné ainsi que l'identification des sites web éloignés à partir desquels lesdites informations sont récupérées ;
- des moyens pour comparer les données d'identification stockées avec lesdites données d'identification reçues par les moyens de réception ; et
- des moyens pour effectuer un enregistrement concernant l'identité des sites web éloignés à partir desquels le navigateur a récupéré des informations déterminées par des moyens de comparaison comme correspondant à des données d'identification stockées par les moyens de stockage.

43. Un serveur selon la revendication 42, dans lequel lesdits moyens de stockage sont agencés pour stocker des données identifiant des adresses de sites web éloignés et lesdits moyens de comparaison sont agencés pour comparer les données d'identification stockées avec les données identifiant des adresses de sites web éloignés reçues par lesdits moyens de réception.

44. Un serveur selon la revendication 42 ou la revendication 43, dans lequel lesdits moyens de stockage sont agencés pour stocker des données identifiant des éléments spécifiques d'information pouvant être contenus dans des pages web, et lesdits moyens de comparaison sont agencés pour comparer lesdites données d'identification stockées avec des données identifiant des éléments spécifiques d'informations contenues dans des pages web reçues par lesdits moyens de réception.

45. Un serveur selon l'une quelconque des revendications 42 à 44, dans lequel lesdits moyens pour effectuer un enregistrement peuvent fonctionner pour enregistrer l'heure de récupération des informations identifiées par ledit enregistrement.

46. Un serveur selon l'une quelconque des revendications 42 à 45, dans lequel ledit programme de surveillance comprend en outre des moyens pour associer des données d'identification d'utilisateur avec la récupération d'éléments d'information par un programme de navigation, et lesdits moyens pour effectuer un enregistrement peuvent fonctionner pour enregistrer la récupération d'informations récupérées par le navigateur qui correspondent à des données d'identification stockées en association avec lesdites données d'identification d'utilisateur.

47. Un serveur selon la revendication 46, dans lequel ledit programme de surveillance comprend en outre des moyens pour empêcher la réalisation d'un traitement prédéterminé jusqu'au moment où lesdits moyens pour effectuer un enregistrement ont enregistré, en association avec les mêmes données d'identification d'utilisateur, la récupération d'informations qui correspondent aux données d'identification stockées.

48. Un serveur selon l'une quelconque des revendications 42 à 46, dans lequel ledit programme de surveillance comprend en outre des moyens pour empêcher la réalisation d'un traitement prédéterminé à moins que lesdits moyens pour effectuer un enregistrement ont effectué au moins l'un desdits enregistrements prédéterminés.

49. Un serveur selon l'une quelconque des revendications 42 à 46, dans lequel ledit programme de surveillance comprend en outre des moyens pour empêcher la réalisation d'un traitement prédéterminé, à moins que lesdits moyens pour effectuer un enregistrement ont effectué au moins un dit enregistrement prédéterminé dans une période de temps prédéterminée.

50. Un serveur selon l'une quelconque des revendications 42 à 49, dans lequel ledit programme de surveillance comprend en outre des moyens pouvant fonctionner pour effectuer automatiquement un traitement prédéterminé suite à la réalisation dudit enregistrement par lesdits moyens pour effectuer un enregistrement.

51. Un serveur selon l'une quelconque des revendications 42 à 50, comprenant des moyens formant programme de séquencement comprenant :
- des moyens de définition d'un jeu de données pour définir une séquence d'opération de récupération à effectuer par un programme de navigation correspondant à la récupération d'informations identifiées par lesdites données d'identification ; et
- des moyens de génération d'affichage sensibles auxdits moyens de comparaison pour fournir en sortie des données d'affichage identifiant l'opération suivante de récupération de la séquence définie par lesdits moyens de définition de jeu de données.

52. Un serveur selon la revendication 51, dans lequel lesdits moyens de génération d'affichage sont sensibles auxdits moyens de comparaison pour générer une interface utilisateur incorporant des moyens susceptibles de fonctionner en réponse à des saisies d'utilisateur pour provoquer la récupération de données par ledit ordinateur à partir du site web éloigné, où l'opération suivante de récupération de ladite séquence est à effectuer.

53. Un serveur selon la revendication 42, comprenant en outre des moyens sensibles à une commande d'un ordinateur éloigné pour fournir en sortie un signal comprenant lesdits moyens formant programme de surveillance et programme de transmission, pour permettre son téléchargement vers un ordinateur éloigné,
des moyens formant programme de transmission pouvant fonctionner suite à l'exécution du programme de surveillance pour transmettre un dit enregistrement vers un serveur éloigné ; et
des moyens sensibles à une commande d'un ordinateur éloigné pour fournir en sortie un signal comprenant lesdits moyens formant programme de surveillance et programme de transmission, pour en permettre le téléchargement.
